# EUROPEAN PATENT APPLICATION

(11) **EP 4 576 863 A1**
(43) Date of publication of application: **25.06.2025**
(21) Application number: 23902158.7
(22) Date of filing: 21.08.2023
(51) Int. Cl.: H04W 24/02, H04W 48/08

(54) **COMMUNICATION METHOD AND TERMINAL DEVICE**

(30) Priority: 12.12.2022 CN 202211589413
(71) Applicant: Honor Device Co., Ltd., Shenzhen, Guangdong 518040 (CN)
(72) Inventor: PANG, Gaokun, Shenzhen, Guangdong 518040 (CN)
(74) Representative: MERH-IP Matias Erny Reichl Hoffmann Patentanwälte PartG mbB
(86) International application number: PCT/CN2023/114031
(87) International publication number: WO 2024/124949

(57) **Abstract**

Embodiments of this application provide a communication method and a terminal device. The method is applied to a terminal device. An SDK module obtains a TD parameter sent by a target APP; on a basis of a URSP rule, the SDK module determines, based on the TD parameter, a target network slice corresponding to the target APP, and sends an identifier of the target network slice to an OS module, and the OS module sends the identifier to a modem module; and the modem module interacts with a network device based on the identifier of the target network slice, and associates the target APP with a PDU session supporting the target network slice, where service data of the target APP is processed in the terminal device based on a data processing class matching the target network slice. In this way, a terminal centralization solution is used, so that update, management, and maintenance of a network slice selection rule are more convenient. In addition, a processing level of the service data of the APP in the terminal matches the network slice, and an advantage of the network slice can be fully exerted.

## Description

This application claims priority to Chinese Patent Application No. 202211589413.9, filed with the China National Intellectual Property Administration on December 12, 2022 and entitled "COMMUNICATION METHOD AND TERMINAL DEVICE", which is incorporated herein by reference in its entirety.

### TECHNICAL FIELD

This application relates to the field of intelligent terminal technologies, and in particular, to a communication method and a terminal device.

### BACKGROUND

A network slice (network slice) is a logical isolated network used to support a specific network capability and a network feature, and is a key technology for satisfying network differentiation requirements of a 5th generation (5th generation, 5G) mobile communication technology proposed in the 3rd generation partnership project (3rd generation partnership project, 3GPP).

Usually, network features of different network slices are different, and the network slices are required to be isolated from each other and do not affect each other. For example, a network slice of an enhanced mobile broadband (enhanced mobile broadband, eMBB) service can provide a transmission rate more than 10 times faster than 4G, and can be applied to currently popular augmented reality (augmented reality, AR) or virtual reality (virtual reality, VR), and high-definition live video streaming, to enable users to obtain quick experience. A network slice of a massive machine-type communications (Massive Machine-Type Communications, mMTC) service needs to support massive terminal access, but a bandwidth is small, and a latency is not required. A network slice of an ultra-reliable low-latency communication (ultra-reliable low-latency communication, URLLC) service is featured in a large bandwidth, a low latency, and high reliability, and may be applied to scenarios such as cloud gaming and autonomous driving.

Therefore, different types of network slices are applicable to different data transmission scenarios. However, in an existing 5G standard, how to determine matched network slices for different applications to enable data streams of the applications to be capable of being transmitted by using corresponding network slices is not described.

### SUMMARY

To resolve the foregoing technical problem, embodiments of this application provide a communication method and a terminal device. According to the method, a terminal centralization solution is used, to determine a matched network slice and a data processing level in a terminal device for an application, so that update, management, and maintenance of a network slice selection rule are more convenient. In addition, a processing level of service data of the application in the terminal matches the network slice, and an advantage of the network slice can also be fully exerted.

According to a first aspect, an embodiment of this application provides a communication method. The method is applied to a terminal device. The terminal device includes an SDK module, an OS module, and a modem module. The method includes:
The SDK module obtains an activation request, for establishing a network connection service, sent by a target APP, where the activation request includes a TD parameter; on a basis of a URSP rule, the SDK module determines, based on the TD parameter, a target network slice corresponding to the target APP, and sends an identifier of the target network slice to an OS module; the OS module sends the identifier of the target network slice to the modem module; and the modem module interacts with a network device based on the identifier of the target network slice, and associates the target APP with a PDU session supporting the target network slice, where service data of the target APP is processed in the terminal device based on a data processing class matching the target network slice.

The target APP may be any APP that is run in the terminal device and to which the network connection service needs to be established. Different APPs have different requirements for a network connection service, for example, a high rate, a large bandwidth, and a low latency.

According to the method, a terminal centralization solution is used, to determine a matched network slice and a data processing level in a terminal device for an application. In comparison with a modem centralization solution and an operating system centralization solution, in this solution, update, management, and maintenance of a network slice selection rule are more convenient. In addition, a processing level of service data of the application in the terminal matches the network slice, and an advantage of the network slice can also be fully exerted.

According to the first aspect, the activation request further includes a TD parameter signature; and correspondingly, that the SDK module determines, based on the TD parameter, a target network slice corresponding to the target APP may include: when determining, based on the TD parameter signature, that security verification of the target APP succeeds, the SDK module determines, based on the TD parameter, the target network slice corresponding to the target APP.

The TD parameter signature may be generated by encrypting a hash value of the TD parameter.

In this way, the SDK module performs security verification on the APP by using a security verification mechanism, so that a problem that the APP abuses the network slice can be avoided.

According to the first aspect or any implementation of the first aspect, that the SDK module determines, based on the TD parameter signature, that security verification of the target APP succeeds may include:
The SDK module decrypts the TD parameter signature based on a signature public key, to obtain a first hash value, where the TD parameter signature is generated based on a signature private key paired with the signature public key; and if determining that the first hash value is consistent with a second hash value, the SDK module determines that security verification of the target APP succeeds, where the second hash value is obtained by performing hash computing on the TD parameter of the target APP.

According to the first aspect or any implementation of the first aspect, the method further includes: The modem module receives an updated URSP rule, and sends the updated URSP rule to the SDK module, so that the SDK module updates a local URSP rule.

In this embodiment of this application, the terminal centralization solution is used, so that in comparison with an operating system centralization solution and a modem centralization solution, a period required for updating the URSP rule is shorter, and the URSP rule is more limited to maintenance and management.

According to the first aspect or any implementation of the first aspect, the method further includes: The SDK module determines the data processing class of the service data of the target APP in the terminal device based on a first identifier of the target network slice; or
the SDK module determines the data processing class of the service data of the target APP in the terminal device based on a second identifier of the target network slice and a type of the target network slice; or
the SDK module determines the data processing class of the service data of the target APP in the terminal device based on a type of the target network slice or a priority of the target network slice.

The first identifier is an identifier of a newly defined network slice. For determining, by the SDK module, the data processing class of the service data of the target APP in the terminal device based on the first identifier of the target network slice, refer to the following first possible implementation.

The second identifier is an existing network slice identifier but with related indication information that is newly added. For determining, by the SDK module, the data processing class of the service data of the target APP in the terminal device based on the second identifier of the target network slice and the type of the target network slice, refer to the following second possible implementation.

For determining, by the SDK module, the data processing class of the service data of the target APP in the terminal device based on the type of the target network slice or the priority of the target network slice, refer to the following third possible implementation.

Because the processing level of the service data of the application in the terminal matches the network slice, the advantage of the network slice can be fully exerted, and a problem of poor service experience caused by mismatching between network slice performance and the processing level of the service data can be avoided.

According to the first aspect or any implementation of the first aspect, that the SDK module determines the data processing class of the service data of the target APP in the terminal device based on a first identifier of the target network slice includes:
The SDK module determines the data processing class of the service data of the target APP in the terminal device based on first indication information in the first identifier of the target network slice, where the first identifier is a customized identifier of the network slice, and the first indication information is used to indicate the data processing level of the APP in the terminal device.

For the first indication information, refer to the following first possible implementation.

According to the first aspect or any implementation of the first aspect, the identifier, of the target network slice, that is sent by the SDK module to the OS module and the identifier, of the target network slice, that is sent by the OS module to the modem module are the first identifier of the target network slice.

According to the first aspect or any implementation of the first aspect, that the SDK module determines the data processing class of the service data of the target APP in the terminal device based on a second identifier of the target network slice and a type of the target network slice may include:
The SDK module determines the data processing class of the service data of the target APP in the terminal device based on second indication information in the second identifier of the target network slice and the type of the target network slice, where the second identifier is a network slice identifier specified in a communication protocol, and the second indication information is indication information newly added to the network slice identifier, and is used indicate the data processing level of the APP in the terminal device.

For the first indication information, refer to the following second possible implementation.

According to the first aspect or any implementation of the first aspect, the identifier, of the target network slice, that is sent by the SDK module to the OS module and the identifier, of the target network slice, that is sent by the OS module to the modem module are the second identifier of the target network slice.

According to the first aspect or any implementation of the first aspect, an aspect related to the data processing level includes at least one of the following: a priority, a latency, a rate, data security, and data reliability.

Correspondingly, the data processing level may be a priority processing level, a latency processing level, a rate processing level, a security processing level, a reliability processing level, or the like.

According to the first aspect or any implementation of the first aspect, when the SDK module determines the data processing class of the service data of the target APP in the terminal device based on the first identifier of the target network slice, the first indication information is a target parameter; the TD parameter of the target APP includes the target parameter; and correspondingly, that the SDK module determines, based on the TD parameter, a target network slice corresponding to the target APP may include:
the SDK module uses a first network slice as the target network slice corresponding to the target APP, where a target parameter value in a first identifier of the first network slice is the same as a target parameter value of the target APP.

The target parameter may be an IS parameter mentioned below.

In this way, the SDK module may match the corresponding target network slice for the APP based on the target parameter value.

According to the first aspect or any implementation of the first aspect, when values of the target parameter are different, data processing levels of the APP in the terminal device are different.

According to the first aspect or any implementation of the first aspect, the target parameter value of the target APP is determined by negotiation between a developer of the target APP and a producer of the terminal device.

In this way, the developer of the target APP may negotiate with the producer of the terminal device to determine the data processing level satisfying a service requirement of the developer of the target APP.

According to a second aspect, an embodiment of this application provides a terminal device. The terminal device includes: one or more processors; a memory; and one or more computer programs, where the one or more computer programs are stored in the memory; and when the computer program is executed by the one or more processors, the terminal device is enabled to perform the communication method according to any one of the first aspect or the implementations of the first aspect.

The terminal device includes an SDK module, an OS module, and a modem module.

The SDK module is configured to: obtain an activation request, for establishing a network connection service, sent by a target APP, where the activation request includes a traffic descriptor TD parameter;
The SDK module is further configured to: on a basis of a UE route selection policy URSP rule, determine, based on the TD parameter, a target network slice corresponding to the target APP, and sends an identifier of the target network slice to the OS module;
the OS module is configured to: send the identifier of the target network slice to the modem module; and
the modem module is configured to: interact with a network device based on the identifier of the target network slice, and associate the target APP with a PDU session supporting the target network slice, where
service data of the target APP is processed in the terminal device based on a data processing class matching the target network slice.

The second aspect and any implementation of the second aspect respectively correspond to the first aspect and any implementation of the first aspect. For technical effect of the second aspect and any implementation of the second aspect, refer to the technical effect corresponding to the first aspect and any implementation of the first aspect. Details are not described herein again.

According to a third aspect, an embodiment of this application provides a chip. The chip includes a processing circuit and a transceiver pin. The transceiver pin and the processing circuit communicate with each other through an internal connection path. The processing circuit performs the communication method according to the first aspect or any implementation of the first aspect, to control a receiving pin to receive a signal, and control a sending pin to send a signal.

The third aspect and any implementation of the third aspect respectively correspond to the first aspect and any implementation of the first aspect. For technical effect of the third aspect and any implementation of the third aspect, refer to the technical effect corresponding to the first aspect and any implementation of the first aspect. Details are not described herein again.

According to a fourth aspect, an embodiment of this application provides a computer program product. The computer program product includes a computer program; and when the computer program is run, a computer is enabled to perform the communication method according to any one of the first aspect or the implementations of the first aspect.

The fourth aspect and any implementation of the fourth aspect respectively correspond to the first aspect and any implementation of the first aspect. For technical effect of the fourth aspect and any implementation of the fourth aspect, refer to the technical effect corresponding to the first aspect and any implementation of the first aspect. Details are not described herein again.

According to a fifth aspect, an embodiment of this application provides a computer-readable storage medium. The computer-readable storage medium includes a computer program. When the computer program is run on an electronic device, the electronic device is enabled to perform the communication method according to any one of the first aspect and the implementations of the first aspect.

The fifth aspect and any implementation of the fifth aspect respectively correspond to the first aspect and any implementation of the first aspect. For technical effect of the fifth aspect and any implementation of the fifth aspect, refer to the technical effect corresponding to the first aspect and any implementation of the first aspect. Details are not described herein again.

### BRIEF DESCRIPTION OF DRAWINGS

FIG. 1 is a schematic diagram of a data structure of S-NSSAI;
FIG. 2 is a schematic diagram of a 5G communication system according to an embodiment of this application;
FIG. 3 is a schematic diagram of a data structure of S-NSSAI according to an embodiment of this application;
FIG. 4 is an example of a schematic diagram of a hardware structure of an electronic device;
FIG. 5 is an example of a schematic diagram of a software structure of an electronic device;
FIG. 6 is a module interaction flowchart related to a communication method according to an embodiment of this application;
FIG. 7 is a schematic diagram of a data structure of a URSP rule;
FIG. 8 is a schematic diagram of a data structure of a URSP rule according to an embodiment of this application;
FIG. 9 is a module interaction schematic diagram related to a communication method according to an embodiment of this application;
FIG. 10 is a module interaction flowchart related to a communication method according to an embodiment of this application; and

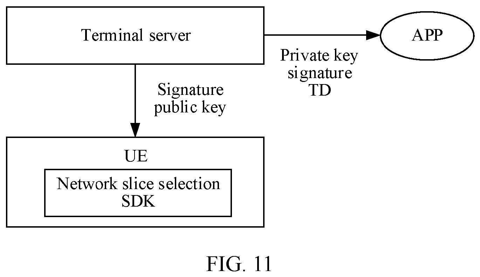

FIG. 11 is an example of a schematic diagram of a scenario of an encryption TD parameter.

### DESCRIPTION OF EMBODIMENTS

The following clearly and completely describes the technical solutions in embodiments of this application with reference to the accompanying drawings in embodiments of this application. It is clear that the described embodiments are a part rather than all of embodiments of this application. All other embodiments obtained by a person of ordinary skill in the art based on embodiments of this application without making creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects, but are not used to describe a particular order of the objects. For example, a first target object, a second target object, and the like are used to distinguish between different target objects, but are not used to describe a particular order of the target objects.

In embodiments of this application, the word such as "example" or "for example" is used to represent giving an example, an illustration, or a description. Any embodiment or design scheme described as "example" or "for example" in embodiments of this application should not be explained as being more preferred or having more advantages than another embodiment or design scheme. To be precise, use of the word such as "example" or "for example" is intended to present a related concept in a specific manner.

In descriptions of embodiments of this application, unless otherwise stated, "a plurality of" means two or more than two. For example, a plurality of processing units means two or more processing units, and a plurality of systems means two or more systems.

The following first describes some concepts related to this application.

### 1. Network slice:

5G ushers in an era of internet of everything. 5G supports three major scenarios: eMBB, mMTC, and URLLC, and three major scenarios include diversified and differentiated applications.

eMBB: Based on breakthroughs in spectrum utilization on a wireless side and a spectrum bandwidth technology, 5G can provide a transmission rate more than 10 times faster than 4G. For currently popular AR/VR and high-definition video live streaming, only a 5G ultra-high rate can satisfy requirements, and a 4G transmission rate cannot be supported. Currently, when a high-definition or large-scale interactive game is watched through VR, a network cable needs to be dragged to obtain data. In the future, a wireless connection is made through a 5G network, and VR/AR can obtain quick experience.

mMTC: Technologies such as multi-user shared access and ultra-dense heterogeneous network are used, so that 5G can support access to 1 million devices per square kilometer, which is 10 times that of 4G. In recent rapid development of smart cities, public facilities such as street lamps, well covers, and water meters all already have a network connection capability, and can be remotely managed. However, 5G brings more innovations. Public devices in industries of a city all can be accessed to an intelligent management platform based on a strong connection capability of the 5G network. These public facilities work together through the 5G network, and can be uniformly managed by only a small quantity of maintenance personnel, thereby greatly improving operation efficiency of the city.

URLLC: A most typical application in the 5G scenario is autonomous driving. A most common scenario of autonomous driving is simultaneous multi-channel communication such as suddenly braking, vehicle-to-vehicle, vehicle-to-person, and vehicle-to-infrastructure, and the like, and a large amount of data processing and decision-making need to be performed instantly. Therefore, a network needs to simultaneously have a large bandwidth, a low latency, and high reliability, and the 5G network has a capability of dealing with this scenario.

In the 4G era, all application scenarios and customer groups are satisfied through one network. For example, to provide a narrowband internet of things (Narrowband Internet of Things, NB-IoT) capability, the network enables an NB-related feature on a network element; and to build network reliability, adds a redundant backup at a device level of the network element. Continuous demands proposed by a public market are satisfied by continuously adding features.

However, requirements of various services in a vertical industry in aspects such as a latency, a quantity of connections, reliability, and safety are very far from each other and are unpredictable. For example, an AR service needs to use a network super high bandwidth of >1600 Mbps, an energy meter reading service needs a network to provide massive connections, autonomous driving needs a network to ensure a low end-to-end latency of several milliseconds and high reliability of more than 99.999%. If one network further wants to satisfy all current requirements and requirements that may be proposed in the future, this cannot be implemented at all.

A network slicing technology may enable an operator to divide a plurality of virtual networks in one hardware infrastructure, allocate resources as required, and flexibly combine the resources, to satisfy different requirements of various services. When a new requirement is proposed and a current network cannot satisfy the requirement, the operator only needs to virtualize a new slice network for this requirement, and does not need to affect an existing sliced network, to get online a service as quickly as possible.

Network slicing is to virtualize a plurality of end-to-end networks based on one general-purpose piece of hardware by using a slicing technology. All networks have different network functions and adapt to different types of service requirements. After the operator purchases a physical resource, one eMBB slice network is virtualized for a public network access service by using the physical resource, and then one mMTC slice network is virtualized by using the physical resource for intelligent meter reading requirements of some specific manufacturers in the vertical industry. The two slice networks respectively provide services for different service scenarios.

Although various industries in the vertical industry have various requirements for network functions, these requirements can be parsed into requirements for network functions such as a network bandwidth, a quantity of connections, a latency, and reliability. A 5G standard also summarizes characteristics of requirements of different services for network functions into three major typical scenarios, and types of network slices corresponding to the three major typical scenarios are respectively an eMBB slice, an mMSC slice, and an URLLC slice.

### 2. Single network slice selection assistance information (Single Network Slice Selection Assistance Information, S-NSSAI):

The S-NSSAI is used to identify a network slice. According to an operation or deployment requirement of the operator, one piece of S-NSSAI may be associated with one or more network slice instances, and one network slice instance may be associated with one or more pieces of S-NSSAI. For example, an eMBB slice 1, an eMBB slice 2, and an eMBB slice 3 are all slices of an eMBB type, and S-NSSAI values of the eMBB slice 1, the eMBB slice 2, and the eMBB slice 3 are all 0x01000000. An eMBB+mMTC slice 4 may provide a service for an eMBB-type service, and may also provide a service for an mMTC service. Therefore, the eMBB+mMTC slice is an eMBB-type slice and an mMTC-type slice, and corresponding S-NSSAI values are respectively 0x01000000 and 0x02000000.

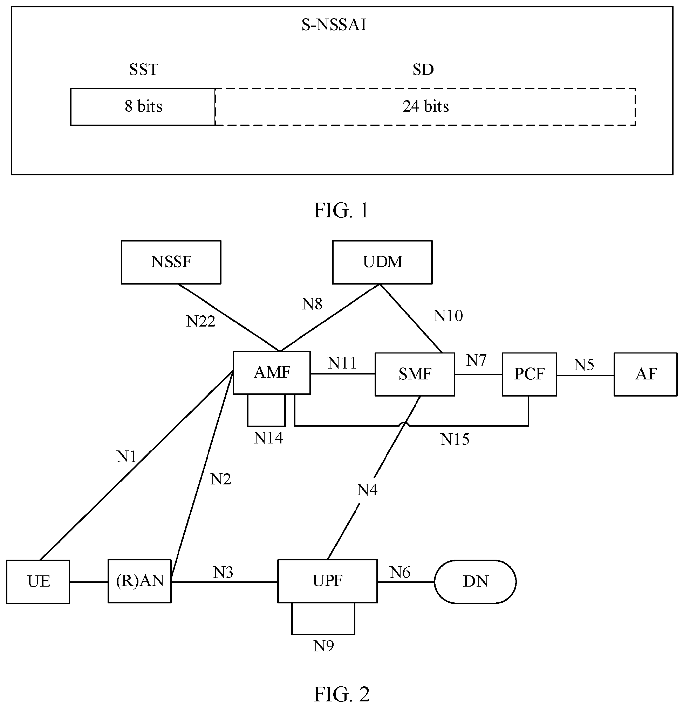

As shown in FIG. 1, the S-NSSAI includes two parts: a slice/service type (Slice/ServiceType, SST) and a slice differentiator (Slice Differentiator, SD).

The SST is a network slice behavior expected in terms of features and services. Standard value ranges of the SST are 1 and 2, 3, 1 represents eMBB, 2 represents URLLC, and 3 represents massive internet of things (Massive Internet of Things, MIoT).

The SD is optional information, and is used to supplement the SST to distinguish between a plurality of network slices of a same slice/service type.

The two parts: the SST and the SD, are combined to represent a slice type and a plurality of slices of a same slice type. For example, S-NSSAI values being 0x01000000, 0x02000000, and 0x03000000 respectively indicate an eMBB-type slice, an URLLC-type slice, and an MIoT-type slice. S-NSSAI values being 0x01000001 and 0x01000002 indicate an eMBB-type slice, and respectively serve a user group 1 and a user group 2.

### 3. Network slice selection assistance information (Network Slice Selection Assistance Information, NSSAI):

The NSSAI is an S-NSSNI set. NSSAI used in the 5G network includes requested NSSAI (Requested NSSAI), allowed NSSAI (Allowed NSSAI), and configured NSSAI (Configured NSSAI), and specific definitions thereof are shown in Table 1.

**Table 1**

| NSSAI | Definitions |
|---|---|
| Requested NSSAI | is NSSAI expected to be used by user equipment (user equipment, UE), and the UE provides the NSSAI to a network side in a registration procedure, and may include a maximum of eight pieces of S-NSSAI |
| Allowed NSSAI | is provided by a serving public land mobile network (public and mobile network, PLMN) for the UE in the procedure such as registration, indicates that the UE may use an S-NSSAI value in a current registration area of the serving PLMN, may include a maximum of eight pieces of S-NSSAI, and is locally stored by the UE |
| Configured NSSAI | is NSSAI applicable to one or more PLMNs, is delivered, by an access and mobility management function (access and mobility management function, AMF) to the UE in a message such as a registration accept or configuration update command, may include a maximum of 16 pieces of S-NSSAI, and is locally stored by the UE |

### 4. Slice selection procedure

In a UE registration procedure, a radio access network (radio access network, RAN) first selects, based on locally stored information and a registration request message of the UE, one initial AMF for the UE to provide a service for the UE. However, the initial AMF may not support a network slice to be used by the UE. For example, the initial AMF supports only an URLLC-type network slice, but the UE requests an eMBB-type network slice. If the initial AMF cannot provide a service for the UE, the initial AMF queries a network slice selection function (network sliceselection function, NSSF) for and selects a target AMF that can support a network slice of the UE, and then sends the registration request message of the UE to the target AMF in a direct or indirect manner. The target AMF processes a registration request of the UE, to further provide the network service for the UE. The procedure may specifically include the following steps:
Step 1: When registering with one PLMN by using an access type, the UE sends the registration request message to the RAN. If the UE stores Configured NSSAI of the PLMN or Allowed NSSAI of the access type of the PLMN, the UE carries Requested NSSAI information in a non-access stratum (non-access stratum, NAS) registration request message and an AN message, and the Requested NSSAI includes S-NSSAI of a slice that the UE expects to register with.
Step 2: The RAN selects the initial AMF based on a globally unique AMF identifier (globally unique AMF identifier, GUAMI) or the Requested NSSAI. If the UE does not provide the Required NSSAI and the GUAMI in the AN message, the RAN needs to send the registration request message from the UE to a default AMF.
Step 3: The initial AMF queries a unified data management (unified data management, UDM) to obtain UE subscription information including Subscribed S-NSSAIs. The initial AMF determines, based on the received Required NSSAI, the Subscribed S-NSSAI, and a local configuration, whether the service can be provided for the UE. If the AMF can serve the UE, the initial AMF is still a serving AMF of the UE. Then, the AMF constructs the Allowed NSSAI based on the Subscribed S-NSSAI and the Requested NSSAI, and returns the Allowed NSSAI to the UE by using a registration accept message. If the initial AMF cannot serve the UE or cannot perform determining, the AMF needs to query the NSSF.
Step 4: The AMF sends information such as the Requested NSSAI, the Subscribed S-NSSAI, a PLMN of a subscription permanent identifier (subscription permanent identifier, SUPI), and a tracking area identifier (tracking area identifier, TAI) to the NSSF for query.
Step 5: The NSSF selects, based on the received information and the local configuration, an AMF set (AMF Set) or a candidate AMF list that may serve the UE, and Allowed NSSAI that is applicable to a current access type, may further select a network slice instance that serves the UE and a network repository function (network repository function, NRF) that is configured to select a network function (network function, NF) in the instance, and sends the information to the initial AMF.
Step 6: If the initial AMF is not in the AMF Set and does not locally store AMF address information, the initial AMF obtains the candidate AMF list by querying the NRF. The NRF returns a group of available AMF lists, including an AMF pointer (AMF Pointer) and address information. One of the initial AMFs is selected as the target AMF. If the initial AMF cannot obtain the candidate AMF list by querying the NRF, the initial AMF needs to send the registration request message of the UE to the target AMF through the RAN, and the message sent by the initial AMF to the RAN includes the AMF Set and the Allowed NSSAI.
Step 7: If the initial AMF determines, based on a local policy and subscription information, to directly send the NAS message to the target AMF, the initial AMF sends, to the target AMF, the registration request message of the UE and information, other than the AMF set, obtained from the NSSF.

If the initial AMF determines, based on the local policy and the subscription information, to forward the NAS message to the target AMF through the RAN, the initial AMF sends a reroute (Reroute) NAS message to the RAN. The Reroute NAS message includes target AMF Set information, the registration request message, and related information obtained from the NSSF.

Step 8: After receiving the registration request message sent in step 7, the target AMF continues to perform related steps of the registration procedure, and finally sends the registration accept message to the UE, where the message carries information such as the Allowed NSSAI.

With introduction of network slicing technologies, operators can provide network capabilities with different functional features, and provide "dedicated" networks for users with different service requirements, to ensure high-quality service levels, and satisfy differentiated service requirements. The users can also use more cool application products, to further excite blue-ocean development of new industry applications. Finally, objectives of improving network resource use efficiency, optimizing network construction investment of the operators, and constructing a flexible and agile 5G network are implemented.

The following uses a requirement of a cloud game application on a network slice as an example for description.

The cloud game application is implemented based on a real-time audio/video stream technology. A server end sends a real-time audio/video stream to a client, the client sends a control instruction stream to the server end, and the server end applies the received control instruction to a game. An entire data processing loop involves processes such as server-end game rendering, audio/video encoding, network transmission, and client audio/video decoding and rendering. These processes are time-consuming to some extent, but network transmission is a factor most affecting user experience. In view of a special service scenario of the cloud game, a higher requirement is put forward for a network: a low latency, a high bandwidth, and no jitter (or a small jitter).

Therefore, the requirement of the cloud game application for the network slice is a low latency requirement. If an existing 4G network and a Wi-Fi (wireless fidelity, wireless fidelity) network are used currently, when the network is normal, a response latency of the cloud game fluctuates approximately within a range of 50 ms to 140 ms. For some games having a high requirement for an operation response latency (for example, an action game, a fighting game, a multiplayer online battle arena game, a first-person shooter game, and a racing game), there is an obvious difference in experience between a cloud game and a local game, and an operation response latency needs to be further reduced. Because of a specificity of a head-mounted display of a VR device, motion sickness (motion sickness) may be caused to a person when a latency is long, and the latency needs to be controlled within 20 ms to effectively control an rejection reaction.

Because service scenarios of different applications are different, requirements of different applications for network slices are also different. Therefore, this is a problem that needs to be resolved for how a terminal device determines, based on a service feature, a service requirement, or the like of the application, a network slice matching the application, to associate the application with a PDU (Protocol Data Unit, protocol data unit) session supporting the network slice, so that service data of the application can be transmitted or routed by using the PDU session supporting the network slice.

A URSP (UE Route Selection Policy, UE route selection policy) rule is a core rule for performing network slice configuration and management on the terminal, acts on the terminal in a network slice service procedure, and is used to guide the terminal to associate the service data with the matched network slice based on the service feature. However, currently, a URSP mechanism is not completely determined in a standard. Therefore, some standardized mechanisms need to be formulated to implement the URSP solution, to further implement industrialization.

FIG. 2 is a schematic diagram of a 5G communication system according to an embodiment of this application. The communication system may include at least one of UE, a (R) AN device, an AMF device, a session management function (Session Management function, SMF) device, a user plane function (User Plane Function, UPF) device, a policy control function (Policy Control Function, PCF) device, an NSSF device, an application function (application function, AF) device, and a UDM device.

The terminal device in embodiments of this application, for example, the UE shown in FIG. 2, may be a device configured to implement a wireless communication function. For example, the terminal device may be deployed on land, including an indoor, outdoor, handheld, or vehicle-mounted device; may be deployed on a water surface (for example, a ship); or may be deployed in the air (for example, on an aircraft, a balloon, or a satellite). The terminal device may be UE, an access terminal, a terminal unit, a terminal station, a mobile station, a mobile console, a remote station, a remote terminal, a mobile device, a wireless communication device, a terminal agent, a terminal apparatus, or the like in a 5G network or a future evolved PLMN. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device may be mobile or fixed.

The access network device in embodiments of this application, for example, the (R)AN device shown in FIG. 2, is a device providing a wireless communication function for the terminal device. For example, the base station includes but is not limited to a next generation NodeB (gnodeB, gNB) in 5G, an evolved NodeB (evolved node B, eNB), a radio network controller (radio network controller, RNC), a NodeB (node B, NB), a base station controller (basestation controller, BSC), a base transceiver station (base transceiver station, BTS), a home base station (for example, a home evolved nodeB, or a home node B, HNB), a baseband unit (baseBand unit, BBU), a transmission reception point (transmitting and receiving point, TRP), a transmission point (transmitting point, TP), and a mobile switching center.

Main functions of the mobility management network element in embodiments of this application, for example, the AMF device shown in FIG. 2, include: functions related to access and mobility: connection management, mobility management, registration management, access authentication and authorization, reachability management, security context management, and the like.

The session management network element in embodiments of this application, for example, the SMF device shown in FIG. 2, is configured to perform session management in a mobile network, for example, session establishment, modification, and release. Specific functions include session-related functions: allocating an internet protocol (internet protocol, IP) address to the terminal device, selecting a UPF providing a packet forwarding function, selecting a service and session continuity (Service and Session Continuity, SSC) mode, roaming, and the like.

Main functions of the user plane function network element in embodiments of this application, for example, the UPF device shown in FIG. 2, include: user plane-related functions: data packet routing and transmission, packet detection, service usage reporting, QoS processing, lawful interception, uplink packet detection, downlink data packet storage, and the like. The UPF may be connected to a data network (data network, DN).

Main functions of the policy control function network element in embodiments of this application, for example, the PCF device shown in FIG. 2, include: policy-related functions: formulating a unified policy, providing policy control, obtaining subscription information related to a policy decision from a user data repository (User Data Repository, UDR), and the like.

Main functions of the network slice selection function network element in embodiments of this application, for example, the NSSF device shown in FIG. 2, include: selecting a group of network slice instances for the UE, determining allowed NSSAI, determining an AMF set that can serve the UE, and the like.

An application function network element in embodiments of this application, for example, the AR device shown in FIG. 2, is responsible for interacting with a 3GPP core network to provide a business or service, including interacting with a network exposure function (network exposure function, NEF), interacting with a policy architecture, and the like.

The unified data management network element in embodiments of this application, for example, the UDM device shown in FIG. 2, supports authentication credential processing in a 3GPP authentication and key agreement mechanism, user identity processing, access authorization, registration and mobility management, subscription management, messaging management, and the like.

The foregoing network elements may be implemented by specified hardware, or may be implemented by a software instance on specified hardware, or may be implemented by a virtual function instantiated on an appropriate platform. This is not limited in this application.

In a service-based architecture, a service-based interface (service-based interface) is used in a control plane. For example, Namf is a service-based interface provided by the AMF network element, and the AMF network element may communicate with another network function through Namf. Nsmf is a service-based interface provided by the SMF network element, and the SMF network element may communicate with another network function through Nsmf. Nnssf is a service-based interface provided by the NSSF network element, and the NSSF network element may communicate with another network function through Nnssf. One function network element may open a capability of the function network element to another authorized function network element through a service-based interface, to provide a network function (network function, NF) service. In other words, the NF service is various capabilities that can be provided.

In addition, embodiments of this application are also applicable to another future-oriented communication technology. Network architectures and service scenarios described in this application are intended to describe the technical solutions in this application more clearly, and do not constitute a limitation on the technical solutions provided in this application. A person of ordinary skill in the art may know that: With evolution of network architectures and emergence of new service scenarios, the technical solutions provided in this application are also applicable to similar technical problems. This application is applicable to a communication network with a network slice deployed. The network slice is a network used for supporting logical isolation of a specific network capability and a specific network feature.

To resolve the foregoing problem, embodiments of this application provide a new network slice selection (network slice selection) rule. In a corresponding communication method, UE may determine, based on the new network slice selection rule, network slices respectively matching different applications, to associate the applications with PDU sessions supporting the corresponding network slices. In addition, the UE may further determine, based on the new network slice selection rule, a data processing level of service data of the application inside a terminal device.

It should be noted that associating, by the UE, a first application with a PDU session supporting a first network slice is transmitting or routing, by the UE, a data stream of the first application by using the PDU session supporting the first network slice.

The new network slice selection rule provided in embodiments of this application belongs to a part of a URSP rule. For example, the network slice selection rule may be set in a route selection descriptor (route selection descriptor, RSD) of the URSP rule. Therefore, the rule may also be referred to as a new URSP rule provided in embodiments of this application.

Currently, a mainstream URSP rule execution manner includes a modem (Modem) centralization solution and an operating system (Operating System, OS) centralization solution. In the modem centralization solution, a matching process and the like between a service attribute and a network slice are implemented in a modem of the terminal, and the modem of the terminal implements corresponding binding between a feature attribute of a service application of the terminal and the network slice based on the URSP rule. In the operating system centralization solution, a matching process and the like between a service attribute and a network slice are implemented in an operating system of the terminal, and the operating system of the terminal implements corresponding binding between a feature attribute of a service application of the terminal and the network slice based on the URSP rule.

In embodiments of this application, a terminal centralization solution is used. In embodiments of this application, a matching process between a service attribute and a network slice, a matching process between service data and a data processing level, and the like are implemented in the terminal, for example, implemented in a software development kit (Software Development Kit, SDK) or middleware. The SDK or the middleware in the terminal implements corresponding binding between the application of the terminal and the network slice based on the new network slice selection rule (or referred to as the new URSP rule).

In comparison with the modem centralization solution and the operating system centralization solution, the terminal centralization solution provided in embodiments of this application is more convenient to update, manage, and maintain the network slice selection rule. In addition, a terminal company has higher initiative rights, and is more conducive to ecological cooperation. A developer of an APP (application, application) may negotiate with the terminal device to determine the network slice selection rule. Specifically, the developer may negotiate to determine a network slice corresponding to the APP and a data processing level of the APP in the terminal device. In this way, the SDK or the middleware in the terminal may select the matched network slice for the application based on the corresponding network slice selection rule, to associate the application with a PDU session supporting the corresponding network slice, and service data of the APP may be processed based on the corresponding data processing level in the terminal device.

The new network slice selection rule provided in embodiments of this application may be defined by a standard organization (for example, 3GPP), or may be defined by a communication operator. The new network slice selection rule is configured on a network side or a terminal side. The network side may be a network device, for example, may include a network device (or referred to as a network element) such as a gNB (the next Generation Node B, next generation NodeB), an AMF, an SMF (Session Management function, session management function), and a PCF (Policy Control function, policy control function). The terminal side may be a terminal device, for example, UE.

When the new network slice selection rule is configured on the network side, the network slice selection rule may be delivered to the terminal side through the network device. In an implementation, an H-PCF (a home PCF) may configure the new network slice selection rule for the terminal device through the AMF and the gNB. For example, the new network slice selection rule may be configured for the terminal device by using a registration command (registration command) message. In an implementation, the communication operator may configure the new network slice selection rule for the terminal device.

The new network slice selection rule provided in embodiments of this application may include a mapping relationship between the application and the network slice, and may also include a mapping relationship between the data processing level of the application in the terminal device and the network slice corresponding to the application. In this way, the new network slice selection rule not only may be used to determine the network slice corresponding to the application and support the PDU session of the corresponding network slice, but also may be used to determine the data processing level of the application in the terminal device.

The data processing level may also be referred to as a data processing class, a data processing manner, an internal processing class/manner, or the like, and is used to indicate level division when the APP performs data processing inside the terminal. For example, the data processing level may be a priority processing level, a latency processing level, a rate processing level, a security processing level, a reliability processing level, or the like. It should be noted that the data processing level of the APP in the terminal device is determined by negotiation between the developer of the APP and the terminal device.

The SDK or the middleware in the terminal may determine, based on the URSP rule, the network slice corresponding to the application, and support the PDU session of the corresponding network slice, and determine, based on indication information of the network slice, the data processing level of the application in the terminal device. For example, the indication information of the network slice may be a network slice identifier, and is used to describe information about the network slice, for example, S-NSSAI.

For the indication information of the network slice, embodiments of this application provide several possible implementations.
(1) In a first possible implementation, the indication information of the network slice is a newly defined network slice identifier, and the newly defined network slice is used to identify a network slice type. In comparison with an existing network slice identifier (for example, S-NSSAI), the newly defined network slice identifier not only can be used to indicate the network slice corresponding to the application, so that the terminal device can associate the application with the PDU session supporting the network slice; but also can be used to indicate the data processing level corresponding to the application, to better satisfy a service requirement of the application.

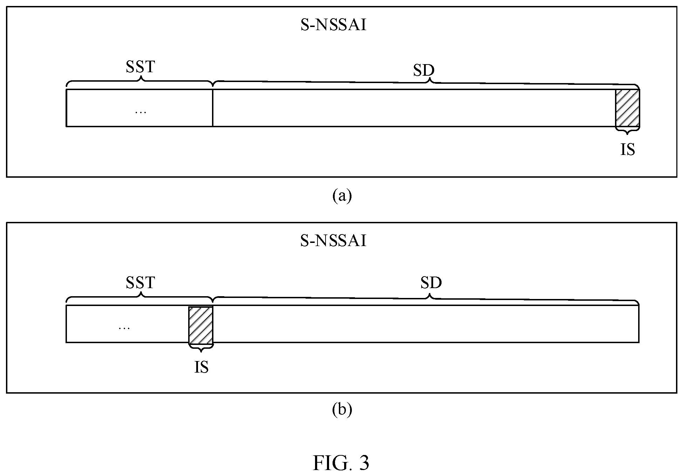

For example, first indication information is added based on a data structure of the existing network slice identifier to a data structure of the newly defined network slice identifier. For example, the first indication information may be an internal slice (Internal Slice, IS) parameter. Optionally, in the newly defined network slice identifier, the first indication information may be set in an SD part of the network slice identifier S-NSSAI, as shown in (a) in FIG. 3. The first indication information may also be set in an SST part of the network slice identifier S-NSSAI, as shown in (b) in FIG. 3.

The first indication information is used to indicate the data processing level of the application in the terminal device. For example, the first indication information may be a slice parameter (for example, a type or a name, which is different from an existing network slice type or name) newly defined by a terminal device vendor. A form of the first indication information is not limited in embodiments.

The first indication information may include one or more bits. When values of the first indication information are different, data processing levels of the corresponding application in the terminal device are different.

In an example, the data processing level of the application in the terminal device may be the priority processing level, for example, a priority level such as a high priority, a medium priority, or a low priority. When the priority processing levels are different, network transmission channels corresponding to the application are different or not completely the same.

In an example, the data processing level of the application in the terminal device may be the latency processing level, for example, a latency level such as 1 ms, 10 ms, or 100 ms, or a latency level such as a low latency, a medium latency, or a high latency. When the latency processing levels are different, network transmission channels corresponding to the application are different or not completely the same.

In an example, the data processing level of the application in the terminal device may be the rate processing level, for example, a rate level such as 1 Mbps, 10 Mbps, 100 Mbps, or 1000 Mbps, or a rate level such as a low rate, a medium rate, or a high rate. When the rate processing levels are different, network transmission channels corresponding to the application are different or not completely the same.

In an example, the data processing level of the application program in the terminal device may be the security processing level, for example, a security level such as ordinary, a TEE (Trusted Execution Environment), or an SE (Secure Element), or a security level such as low, medium, or high. When the security processing levels are different, network transmission channels corresponding to the application are different or not completely the same.

In an example, the data processing level of the application in the terminal device may be the reliability processing level, for example, a reliability level such as 99%, 99.9%, 99.99%, or 99.999%, or a reliability level such as a low, medium, or high. When the reliability processing levels are different, network transmission channels corresponding to the application are different or not completely the same. When the reliability processing level is "x%", it indicates that longest possible service interruption time of the terminal device when the terminal device continuously runs for one year is (1-x%)*365*24. It may be understood that when the longest possible service interruption time of the terminal device is shorter, the reliability processing level is higher. For example, the reliability level "99.9%" indicates that the longest possible service interruption time when the terminal device continuously runs for one year is: (1-99.9%)*365*24=8.76 hours, and the reliability level "99.99%" indicates that the longest possible service interruption time when the terminal device continuously runs for one year is: (1-99.99%)*365*24=0.876 hours=52.6 minutes.

Table 2 shows an example of a mapping relationship between the network slice identifier, the first indication information, and the data processing level corresponding to the application in the terminal device.

**Table 2**

| Network slice | First indication information | Data processing level corresponding to an application in a terminal device |
|---|---|---|
| S-NSSAI 1 | 00 | First priority processing level |
| S-NSSAI 2 | 01 | Second priority processing level |
| S-NSSAI 3 | 10 | First latency processing level |
| S-NSSAI 4 | 11 | Second latency processing level |

As shown in Table 2, the first indication information including two bits is used as an example, and "00", "01", "10", and "11" respectively identify different data processing levels. When the first indication information carried in the S-NSSAI 1 is "00", it indicates that the data processing level corresponding to the application in the terminal device is the first priority processing level, and the terminal device associates the application with a PDU session supporting the S-NSSAI 1. When the first indication information carried in the S-NSSAI 2 is "01", it indicates that the data processing level corresponding to the application in the terminal device is the second priority processing level, and the terminal device associates the application with a PDU session supporting the S-NSSAI 2. When the first indication information carried in the S-NSSAI 3 is "10", it indicates that the data processing level corresponding to the application in the terminal device is the first latency processing level, and the terminal device associates the application with a PDU session supporting the S-NSSAI 3. When the first indication information carried in the S-NSSAI 4 is "11", it indicates that the data processing level corresponding to the application in the terminal device is the second latency processing level, and the terminal device associates the application with a PDU session supporting the S-NSSAI 4.

The first priority processing level is different from the second priority processing level, and the first priority processing level may be higher than the second priority processing level. For example, the terminal device may perform processing at the first priority processing level for a phone application, and may perform processing at the first priority processing level for a game application; and when the phone application and the game application run simultaneously, the terminal device may preferentially process a data stream of the phone application. The first latency processing level is different from the second latency processing level, and the first latency processing level may be higher than the second latency processing level, that is, a processing latency corresponding to the first latency processing level is less than a processing latency corresponding to the second latency processing level.

(2) In a second possible implementation, the indication information of the network slice is an existing network slice identifier, and second indication information is added to the existing network slice identifier. For example, the second indication information may be added to an SST part, an SD part, or an NSSAI information element identifier (Information Element Identifier, IEI) of the network slice identifier.

The second indication information may include one or more bits, and is used to indicate the data processing level of the application in the terminal device, and the data processing level corresponds to a network slice type (or a network slice priority). For example, when the network slice type is a low latency, the corresponding data processing level is a low latency processing level; or when the network slice type is a high rate, the corresponding data processing level is a high rate processing level.

Table 3 shows an example of a mapping relationship between the network slice identifier, the network slice type, the second indication information, and the data processing level corresponding to the application in the terminal device.

**Table 3**

| Network slice | Network slice type | Second indication information | Data processing level corresponding to an application in a terminal device |
|---|---|---|---|
| S-NSSAI 1 | Low latency | 1 | Low latency processing level |
| S-NSSAI 2 | High rate | 1 | High rate processing level |
| S-NSSAI 3 | High security | 1 | High security processing level |
| S-NSSAI 4 | High reliability | 1 | High reliability processing level |
| S-NSSAI 5 | Large bandwidth | 1 | Large bandwidth processing level |

For example, as shown in Table 3, when a type of the network slice S-NSSAI 1 is the low latency network slice, after the second indication information "1" is added to the identifier of the network slice S-NSSAI 1, the second indication information "1" may indicate that the data processing level corresponding to the application in the terminal device is the low latency processing level. The low latency processing level may mean that the service data is preferentially processed inside the terminal device. For example, scheduling is preferentially performed, queuing is preferentially performed, sending is performed in advance for queue-jumping, or sending is preferentially performed.

In this way, when the network slice corresponding to the application service is a low latency network slice, the data processing level of the service inside the terminal device is a low latency processing level, so that a low latency requirement of the service can be satisfied, a problem of poor service experience caused by a low network slice latency and a high latency during processing inside the terminal device can be avoided, and an advantage of the low latency network slice can be fully exerted, to satisfy the service requirement.

For example, as shown in Table 3, when a type of the network slice S-NSSAI 2 is the high rate network slice, after the second indication information "1" is added to the identifier of the network slice S-NSSAI 2, the second indication information "1" may indicate that the data processing level corresponding to the application in the terminal device is the high rate processing level. The high rate processing level may be that the terminal device processes the service data by allocating a large quantity of processing resources inside the terminal device, and the processing resources may be, for example, a memory (memory) resource, a computing resource (for example, a CPU (central processing unit, central processing unit), a GPU (graphics processing unit, graphics processing unit), and an NPU (Neural-network Processing Unit, neural-network processing unit)), and the like.

In this way, when the network slice corresponding to the application service is a high rate network slice, the processing level of the service inside the terminal device is a high rate processing level, so that a high rate requirement of the service can be ensured, a problem of poor service experience caused by a high network slice rate and a low rate during processing inside the terminal device can be avoided, and an advantage of the high rate network slice can be fully exerted, to satisfy the service requirement.

For example, as shown in Table 3, when a type of the network slice S-NSSAI 3 is the high security network slice, after the second indication information "1" is added to the identifier of the network slice S-NSSAI 3, the second indication information "1" may indicate that the data processing level corresponding to the application in the terminal device is the high security processing level. The high security processing level may be that the terminal device puts the service data in a high security area (for example, a TEE or an SE) for processing, and/or the terminal device uses a high encryption manner for the service data, to ensure security of the service data.

In this way, when the network slice corresponding to the application service is a high security network slice, the processing level of the service inside the terminal device is a high security processing level, so that a high security requirement of the service can be ensured, a problem of poor service experience caused by high network slice security and low security during processing inside the terminal device can be avoided, and an advantage of the high security network slice can be fully exerted, to satisfy the service requirement.

For example, as shown in Table 3, when a type of the network slice S-NSSAI 4 is the high reliability network slice, after the second indication information "1" is added to the identifier of the network slice S-NSSAI 4, the second indication information "1" may indicate that the data processing level corresponding to the application in the terminal device is the high reliability processing level. The high reliability processing level may be that the terminal device performs a plurality of backups and/or a plurality of transmissions of the service data, to ensure reliability of the service data.

In this way, when the network slice corresponding to the application service is a high reliability network slice, the processing level of the service inside the terminal device is a high reliability processing level, so that a high reliability requirement of the service can be ensured, a problem of poor service experience caused by high network slice reliability and low reliability during processing inside the terminal device can be avoided, and an advantage of the high reliability network slice can be fully exerted, to satisfy the service requirement.

For example, as shown in Table 3, when a type of the network slice S-NSSAI 5 is the large bandwidth network slice, after the second indication information "1" is added to the identifier of the network slice S-NSSAI 5, the second indication information "1" may indicate that the data processing level corresponding to the application in the terminal device is the large bandwidth processing level. The large bandwidth processing level may be, for example, that the terminal device transmits the service data by using a large bandwidth (for example, 80 M/120 M) frequency band, or that the terminal device transmits the data by using a plurality of frequency bands simultaneously.

In this way, when the network slice corresponding to the application service is a large bandwidth network slice, the processing level of the service inside the terminal device is a large bandwidth processing level, so that a large bandwidth requirement of the service can be ensured, a problem of poor service experience caused by a large network slice bandwidth and a small bandwidth during processing inside the terminal device can be avoided, and an advantage of the large bandwidth network slice can be fully exerted, to satisfy the service requirement.

(3) In a third possible implementation, the existing network slice identifier indicates the data processing level of the application in the terminal device, and the data processing level corresponds to a network slice type (or a network slice priority). In this implementation, indication information is not added to the existing network slice identifier, but the data processing level of the application in the terminal device is implicitly indicated based on the network slice type.

Table 4 shows an example of a mapping relationship between the network slice identifier, the network slice type, and the data processing level corresponding to the application in the terminal device.

**Table 4**

| Network slice | Network slice type | Data processing level corresponding to an application in a terminal device |
|---|---|---|
| S-NSSAI 1 | Low latency | Low latency processing level |
| S-NSSAI 2 | High rate | High rate processing level |
| S-NSSAI 3 | High security | High security processing level |
| S-NSSAI 4 | High reliability | High reliability processing level |

For example, as shown in Table 4, when a type of the network slice S-NSSAI 1 is a low latency network slice, it implicitly indicates that the data processing level of the application in the terminal device is the low latency processing level; when a type of the network slice S-NSSAI 2 is a high rate network slice, it implicitly indicates that the data processing level of the application in the terminal device is the high rate processing level; when a type of the network slice S-NSSAI 3 is a high security network slice, it implicitly indicates that the data processing level of the application in the terminal device is the high security processing level; and when a type of the network slice S-NSSAI 4 is a high reliability network slice, it implicitly indicates that the data processing level of the application in the terminal device is the high reliability processing level.

Table 5 shows an example of a mapping relationship between the network slice identifier, the network slice priority, and the processing priority level of the application in the terminal device.

**Table 5**

| Network slice | Network slice priority | Processing priority level of an application in a terminal device |
|---|---|---|
| S-NSSAI 1 | High | High |
| S-NSSAI 2 | Medium | Medium |
| S-NSSAI 3 | Low | Low |

Assuming that the network slice priority may include three levels: high, medium, and low, correspondingly, the processing priority level corresponding to the application in the terminal device may also include three levels: high, medium, and low. For example, as shown in Table 5, when a priority of the network slice S-NSSAI 1 is "high", a processing priority level of the application corresponding to the network slice S-NSSAI 1 in the terminal device is also "high"; when a priority of the network slice S-NSSAI 2 is "medium", a processing priority level of the application corresponding to the network slice S-NSSAI 2 in the terminal device is also "medium"; and when a priority of the network slice S-NSSAI 3 is "low", a processing priority level of the application corresponding to the network slice S-NSSAI 3 in the terminal device is also "low".

When a priority of the network slice S-NSSAI 1 is "low", a processing priority level of the application corresponding to the network slice S-NSSAI 1 in the terminal device is also "low". That is, when a priority of the network slice corresponding to the application is "high", a processing priority level of the application service inside the terminal device is also "high", to ensure the service requirement (for example, a requirement such as a low latency and high reliability) of the application. When a priority of the network slice corresponding to the application is "medium", a processing priority level of the application service inside the terminal device is also "medium", to ensure the service requirement (for example, a requirement such as a low latency) of the application as much as possible. When a priority of the network slice corresponding to the application is "low", a processing priority level of the application service inside the terminal device is also "low", to properly satisfy the service requirement of the application.

Table 6 shows an example of a mapping relationship between the network slice identifier, the network slice priority, and the processing priority level of the application in the terminal device.

**Table 6**

| Network slice | Network slice priority | Processing priority level of an application in a terminal device |
|---|---|---|
| S-NSSAI 1 | High | High |
| S-NSSAI 2 | Low | Low |

Assuming that the network slice priority may include two levels: high and low, correspondingly, the processing priority level corresponding to the application in the terminal device may also include two levels: high and low. For example, as shown in Table 6, when a priority of the network slice S-NSSAI 1 is "high", a processing priority level of the application corresponding to the network slice S-NSSAI 1 in the terminal device is also "high"; when a priority of the network slice S-NSSAI 2 is "low", a processing priority level of the application corresponding to the network slice S-NSSAI 2 in the terminal device is also "low".

It may be understood that the network slice priority may include more levels, for example, may include four levels, five levels, six levels, and the like. This is not limited in embodiments of this application. Correspondingly, the processing priority level corresponding to the application in the terminal device may also include four levels, five levels, six levels, and the like.

In the mapping relationships shown in Table 5 and Table 6, cases in which the network slice priority and the processing priority level of the application in the terminal device are in one-to-one correspondence are used for explanation and description.

In a possible case, the network slice priority includes N levels, and the processing priority level corresponding to the application in the terminal device includes M levels, N and M are positive integers, and N and M are not equal. In this case, one network slice priority may correspond to a plurality of processing priority levels of the application in the terminal device, or a plurality of network slice priorities may correspond to one processing priority level of the application in the terminal device. This is not limited in embodiments.

Table 7 shows an example of a mapping relationship between the network slice identifier, the network slice priority, and the processing priority level of the application in the terminal device.

**Table 7**

| Network slice | Network slice priority | Processing priority level of an application in a terminal device |
|---|---|---|
| S-NSSAI 1 | High | High |
| S-NSSAI 2 | Medium | Low |
| S-NSSAI 3 | Low | Low |

Assuming that the network slice priority may include three levels: high, medium, and low, the processing priority level corresponding to the application in the terminal device may also include two levels: high and low. For example, as shown in Table 7, when a priority of the network slice S-NSSAI 1 is "high", a processing priority level of the application corresponding to the network slice S-NSSAI 1 in the terminal device is also "high"; when a priority of the network slice S-NSSAI 2 is "medium", a processing priority level of the application corresponding to the network slice S-NSSAI 2 in the terminal device is "low"; and when a priority of the network slice S-NSSAI 3 is "low", a processing priority level of the application corresponding to the network slice S-NSSAI 3 in the terminal device is "low". That is, a plurality of network slice priorities may correspond to one processing priority level of the application in the terminal device

In an implementation, the network slice priority may be determined based on the network slice type. For example, priorities of network slices of types such as uRLLC, eMBB, and mMTC are sorted in descending order.

With reference to the foregoing examples, the terminal device may determine, based on the corresponding network slice selection rule, that a specific application performs data processing at a corresponding data processing level (for example, a low latency processing level or a high rate processing level) in the terminal device, and the application corresponds to a network slice. In addition, the terminal device may associate the application with a PDU session supporting the network slice, and the network slice may be identified by using indication information of the network slice (for example, a network slice identifier) in the network slice selection rule. That the application performs data processing at the corresponding data processing level in the terminal device is that a data stream of the application (traffic of application) performs data processing at the corresponding data processing level in the terminal device.

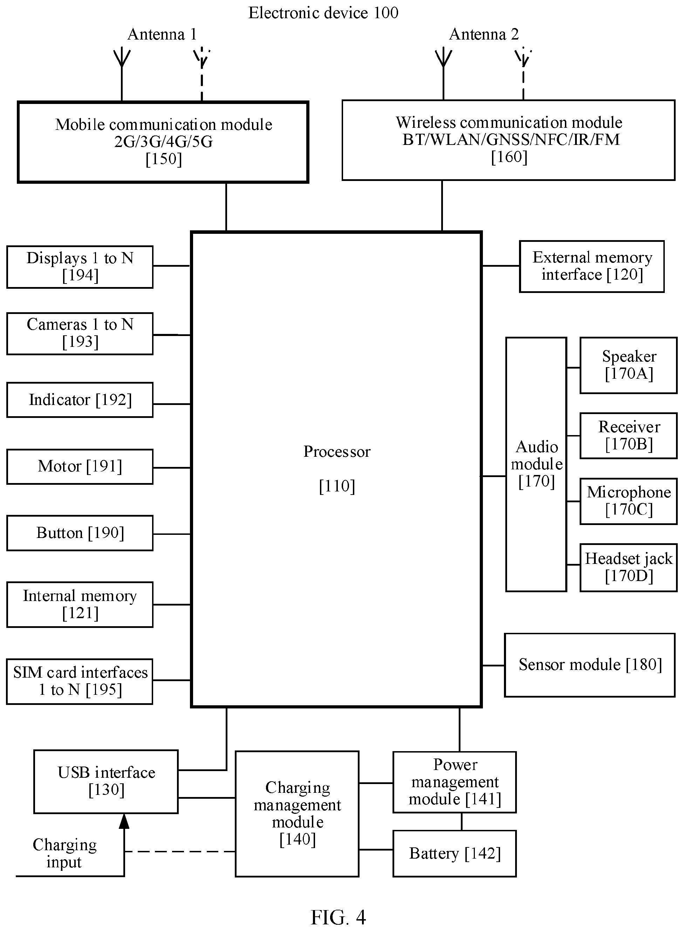

FIG. 4 is a schematic diagram of a structure of an electronic device 100. Optionally, the electronic device 100 may be referred to as a terminal, or may be referred to as a terminal device. This is not limited in this application. It should be noted that, the schematic diagram of the structure of the electronic device 100 is applicable to the UE mentioned above. It should be understood that the electronic device 100 shown in FIG. 4 is only an example of the electronic device, and the electronic device 100 may have more or fewer components than those shown in the figure, may combine two or a plurality of components, or may have a different component configuration. The components shown in FIG. 4 may be implemented by hardware that includes one or more signal processing circuits and/or application-specific integrated circuits, software, or a combination of hardware and software.

The electronic device 100 may include: a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a SIM card interface 195, and the like. The sensor module 180 may include a pressure sensor, a gyro sensor, an acceleration sensor, a temperature sensor, a motion sensor, a barometric pressure sensor, a magnetic sensor, a distance sensor, an optical proximity sensor, a fingerprint sensor, a touch sensor, an ambient light sensor, a bone conduction sensor, and the like.

The processor 110 may include one or more processing units. For example, the processor 110 may include an application processor (application processor, AP), a modem (Modem) processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time-sequence signal, to complete control of instruction fetch and instruction execution.

A memory may be further disposed in the processor 110, and is configured to store instructions and data. In some embodiments, the memory in the processor 110 is a cache memory.

The USB interface 130 is an interface that conforms to a USB standard specification, and may be specifically a mini USB interface, a micro USB interface, a USB type-C interface, or the like. The USB interface 130 may be configured to be connected to the charger to charge the electronic device 100, or may be configured to transmit data between the electronic device 100 and a peripheral device, or may be configured to be connected to a headset to play audio through the headset.

The charging management module 140 is configured to receive a charging input from the charger. The charger may be a wireless charger or a wired charger. The charging management module 140 may further supply power to the electronic device through the power management module 141 while charging the battery 142.

The power management module 141 is configured to be connected to the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the electronic device 100, for wireless communication including 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

A modem (Modem) processor runs on a baseband chip and a co-processor. A SIM card module is disposed in the modem. The SIM card module in the modem may be configured to provide functions related to SIM information such as network registration and authentication. For example, when a user uses an electronic device with a modem, a series of SIM card functions may be implemented by triggering a local application. The foregoing SIM card may be a physical card (or referred to as a hard card), or may be a virtual SIM card (or referred to as a soft card), and may include an embedded-subscriber identity module (embedded-SIM, eSIM), and the like. A specific form of the SIM card is not limited in this embodiment of this application.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to an application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110 and may be disposed in a same component as the mobile communication module 150 or another functional module.

The wireless communication module 160 may provide a solution, applied to the electronic device 100, for wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components integrating at least one communication processing module. The wireless communication module 160 receives an electromagnetic wave through the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the to-be-sent signal, and convert an amplified signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 may communicate with a network and another device by using a wireless communication technology.

The electronic device 100 implements a display function through the GPU, the display 194, the application processor, and the like. The processor 110 may include one or more GPUs that execute program instructions to generate or change display information. The display 194 is configured to display an image, a video, and the like. The electronic device 100 may implement a photographing function through the ISP, the camera 193, the video codec, the GPU, the display 194, the application processor, and the like. The camera 193 is configured to capture a still image or a video.

The external memory interface 120 may be configured to be connected to an external storage card such as a micro SD card, to expand a storage capacity of the electronic device 100.

The internal memory 121 may be configured to store computer-executable program code, and the executable program code includes instructions. The processor 110 runs the instructions stored in the internal memory 121, to perform various functional applications and data processing of the electronic device 100, so that the electronic device 100 implements the communication method in embodiments of this application.

The electronic device 100 may implement an audio function, for example, music play and recording through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The pressure sensor is configured to sense a pressure signal, and can convert the pressure signal into an electrical signal. In some embodiments, the pressure sensor may be disposed on the display 194. The electronic device 100 may also calculate a touch location based on a detection signal of the pressure sensor.

The touch sensor is also referred to as a "touch panel". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the application processor, to determine a type of a touch event.

The button 190 includes a power on/off button (or referred to as a power button), a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effects.

The indicator 192 may be an indicator light, and may be configured to indicate a charging state and a power change, or may be configured to indicate a message, a missed call, a notification, and the like.

The SIM card interface 195 is configured to be connected to a SIM card. The SIM card may be inserted into the SIM card interface 195 or withdrawn from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 is further compatible with different types of SIM cards. The SIM card interface 195 is also compatible with an external storage card. The electronic device 100 interacts with a network through the SIM card, to implement functions such as making/answering a call and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a microservice architecture, or a cloud architecture. In an embodiment of this application, an Android system with a layered architecture is used as an example to describe a software structure of the electronic device 100.

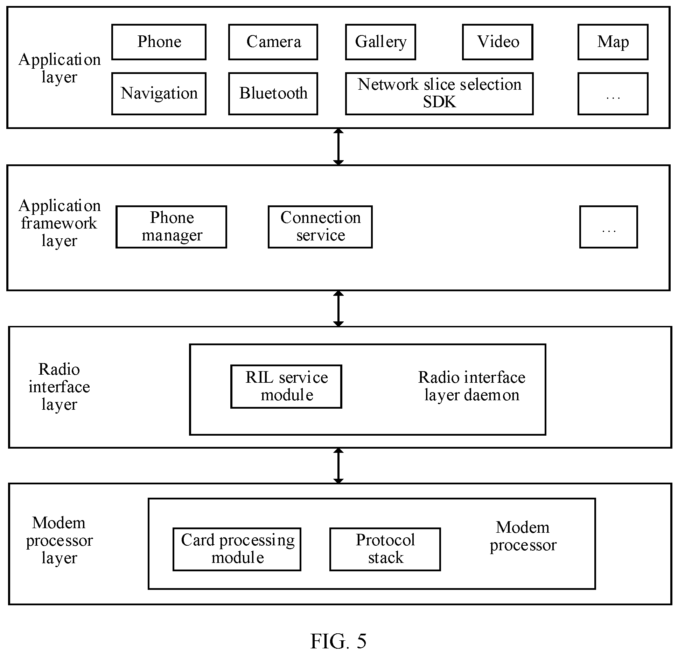

FIG. 5 is a block diagram of a software structure of an electronic device 100 according to an embodiment of this application.

In a layered architecture of the electronic device 100, software is divided into several layers, and each layer has a clear role and responsibility. The layers communicate with each other through a software interface. In some embodiments, the Android system is divided into four layers, namely, an application layer, an application framework layer, a radio interface layer (Radio Layer Interface, RIL), and a modem (Modem) processor layer from top to bottom.

For the electronic device 100 in FIG. 4, data exchange may be performed between the application layer and the application framework layer through a conventional interface. Data exchange may be performed between the application framework layer and the RIL through a hardware abstraction layer interface definition language (Hardware Abstraction Layer Interface Definition Language, HIDL) interface. Data exchange may be performed between the RIL and the modem layer based on a chip architecture of the electronic device. For example, the RIL exchanges data with the modem layer in a manner such as PCIExpress (peripheral component interconnect express, PCIE) or memory sharing.

The application layer may include a series of application packages.

As shown in FIG. 5, the application package may include applications such as Phone, Camera, Gallery, Video, Map, Navigation, Bluetooth, and a network slice selection SDK.

The network slice selection SDK may determine, based on a URSP rule, a network slice corresponding to an APP, and determine a data processing level corresponding to the APP in the electronic device.

The application framework layer provides an application programming interface (application programming interface, API) and a programming framework for an application at the application layer. The application framework layer includes some predefined functions.

As shown in FIG. 5, the application framework layer may include a phone manager (Telephony), a connection service (Connectivity Service), and the like.

The phone manager is configured to provide a management function for a cellular-related service of the electronic device 100. For example, the phone manager is configured to manage call states (including answering, declining, and the like) and a cellular data connection state (including have established a connection to a cellular network, have been disconnected from a cellular network, being established a connection to a cellular network, being disconnected from a cellular network, or the like). It may be understood that the cellular network may include a 2G network, a 3G network, a 4G network, a 5G network (for example, an SA network), and the like.

In a possible implementation, the application framework layer may further include a window manager, a content provider, a view system, a resource manager, a notification manager, and the like (not shown in FIG. 5). This is not limited in embodiments of this application.

The window manager is configured to manage a window program. The window manager may obtain a size of the display, determine whether there is a status bar, perform screen locking, take a screenshot, and the like.

The content provider is configured to store and obtain data, and enable the data to be accessible by an application. The data may include a video, an image, audio, calls that are made and answered, a browsing history and a browsing bookmark, an address book, and the like.

The view system includes visual controls such as a control for displaying a text and a control for displaying a picture. The view system may be configured to construct an application. A display interface may include one or more views. For example, a display interface including an SMS message notification icon may include a view for displaying a text and a view for displaying a picture.

The resource manager provides various resources such as a localized character string, an icon, a picture, a layout file, and a video file for an application.

The notification manager enables an application to display notification information in a status bar, and may be configured to convey a notification-type message. The notification-type message may automatically disappear after a short pause without requiring user interaction. For example, the notification information is for notifying download completion, providing a message prompt, and the like.

In comparison with a modem side, the application layer and the application framework layer may be referred to as an AP side. In this embodiment of this application, the determining, based on a URSP rule, a network slice corresponding to an APP, and determining a data processing level corresponding to the APP in the electronic device are implemented on the AP side, and may be specifically implemented in the network slice selection SDK on the AP side.

The RIL is an interface layer between the application framework layer and the modem layer, is responsible for transmission of a cellular-related service control plane operation, and is responsible for reliable data transmission. The RIL may include a radio interface layer daemon (Radio Interface Layer Daemon, rild), and the rild may include: a ril service module. For example, the ril service module may be configured to forward, to the modem layer, an instruction sent by the phone manager through the HIDL interface, and forward, to the phone manager, response data corresponding to the instruction returned by the modem layer and a state or a notification actively reported by the modem layer.

The modem layer includes a modem (Modem) processor, and the modem may include: a protocol stack and a card processing module. The protocol stack may include wireless communication protocol stacks such as a 2G protocol stack, a 3G protocol stack, a 4G protocol stack, and a 5G protocol stack.

The card processing module may include related modules of a SIM card, for example, a SIM card module, a local SIM card module, and a SIM card slot driver. The SIM card slot driver may be connected to a SIM hard card.

The SIM card module is configured to provide functions related to SIM information such as network registration and authentication. The SIM card module may support a local SIM card invoking mode provided by the local SIM card module.

The local SIM card module is configured to access local SIM card information through the SIM card slot driver.

In a possible implementation, the SIM card slot driver and the SIM hard card may be disposed in the modem of the electronic device 100. Alternatively, the SIM card slot driver and the SIM hardware card may not be disposed in the modem of the electronic device 100. In this case, the electronic device 100 may use a local eSIM.

The foregoing schematic diagram of the architecture of the Android system is merely used as an example for description, and does not constitute any limitation.

It may be understood that the layers in the software structure shown in FIG. 5 and components included in the layers do not constitute a specific limitation on the electronic device 100. In some other embodiments of this application, the electronic device 100 may include more or fewer layers than those shown in the figure, and each layer may include more or fewer components. This is not limited in this application.

It may be understood that to implement the communication method in embodiments of this application, the electronic device includes corresponding hardware and/or software modules for performing the functions. With reference to algorithm steps in examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

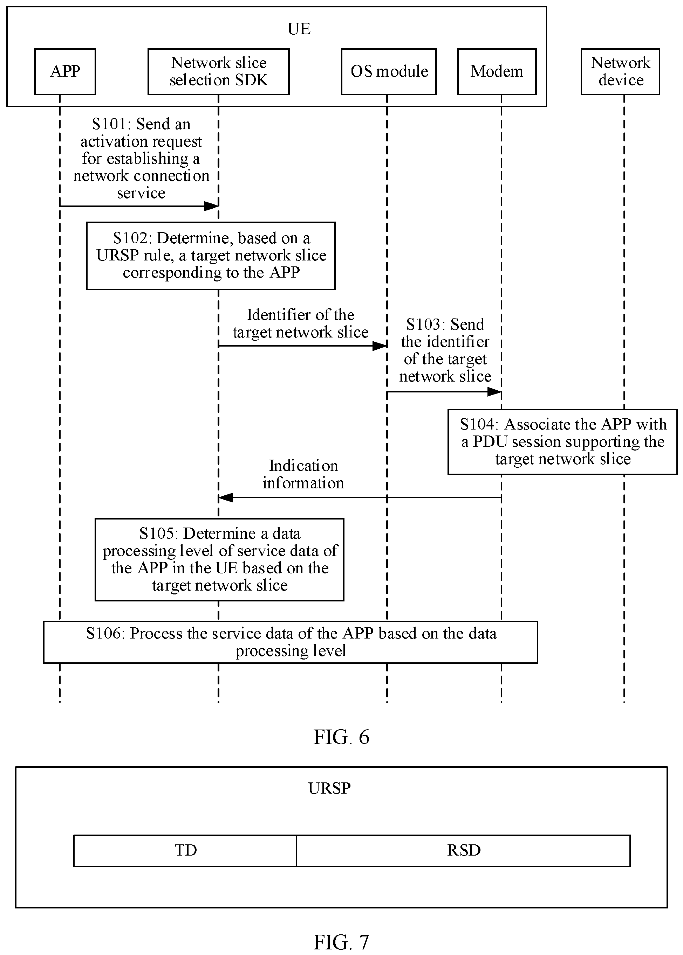

As shown in FIG. 6, an embodiment of this application provides a communication method. The communication method may specifically include the following steps.

S101: An APP sends an activation request for establishing a network connection service to a network slice selection SDK.

The activation request may include a TD (Traffic Descriptor, traffic descriptor) parameter of the APP. For example, the TD parameter of the APP may include, but is not limited to, parameters such as an APP identifier (APP ID), a data network name (DNN), an IP triplet (IP Descriptor), a domain descriptor (Domain Descriptor), and a connection capability (Connetion Capabilities).

S102: On a basis of a URSP rule, the network slice selection SDK determines, based on the TD parameter, a target network slice corresponding to the APP, and sends an identifier of the target network slice to an OS module.

The URSP rule, as shown in FIG. 7, mainly includes two groups of important parameters. One group is a TD parameter describing an APP attribute. The other group is an RSD parameter describing a data carrying attribute, and may include, but is not limited to, parameters such as S-NSSAI, an SSC mode (session and service continuity mode), and a DNN. The URSP rule is essentially a correspondence between a plurality of groups of TD parameters and a plurality of groups of RSD parameters.

After obtaining the TD parameter of the APP, the network slice selection SDK may find, based on the URSP rule, the RSD parameter corresponding to the TD parameter. Because the RSD parameter includes the identifier S-NSSAI of the network slice, the target network slice that can be accessed by the APP is determined.

For example, after obtaining the TD parameter of the APP, the network slice selection SDK may match the network slice corresponding to the APP based on the URSP rule and a priority of the network slice. For example, the network slice selection SDK first matches, based on the URSP rule, the network slice corresponding to the APP in a network slice of a first priority; and if the network slice selection SDK cannot match, based on the URSP rule, the network slice corresponding to the APP in a network slice of a second priority. The first priority is higher than the second priority.

Further, the network slice selection SDK may send, to the OS module through an API (Application Program Interface, application programming interface) provided by the OS module, the identifier of the target network slice corresponding to the APP.

S103: The OS module sends the identifier of the target network slice to a modem module.

The OS module sends, to the modem module through an API provided by the modem module, the received identifier of the target network slice corresponding to the APP.

S104: The modem module interacts with a network device, associates the APP with a PDU session supporting the target network slice, and feeds back association success indication information to the network slice selection SDK.

In a possible implementation, the network slice selection SDK may alternatively directly send, to the modem module through the API provided by the modem module, the identifier of the target network slice corresponding to the APP.

The identifier, of the target network slice corresponding to the APP, received by the modem module is an identifier of a network slice that UE expects to register with, namely, an identifier of a requested network slice. The modem module generates a registration request message based on the identifier of the target network slice, that is, the registration request message includes the identifier (the NSSAI) of the target network slice; and sends the registration request message to a network side device (for example, a gNB).

It should be noted that, the identifier, of the target network slice, included in the registration request message may be the network slice identifier mentioned in the first possible implementation, the second possible implementation, and the third possible implementation. If the identifier of the target network slice is a network slice identifier newly defined in the foregoing first possible implementation, the identifier of the target network slice carries first indication information, and the first indication information is used to indicate a data processing level of an application in a terminal device. If the identifier of the target network slice is a network slice identifier added with the second indication information mentioned in the foregoing second possible implementation, the identifier of the target network slice carries second indication information, and the second indication information is used to indicate a data processing level of an application in a terminal device. If the identifier of the target network slice is a network slice identifier in an existing technology mentioned in the foregoing third possible implementation, the target network slice may implicitly indicate a data processing level of an application in a terminal device.

After receiving the registration request message from the UE, the gNB may forward the registration request message to an AMF. If the UE is in a CM-CONNECTED (CM-CONNECTED) state, the gNB may forward the registration request message to the AMF based on an N2 connection of the UE. If the UE is in a CM-IDLE (CM-IDLE) state, the UE does not include a "requested NSSAI" and a globally unique AMF identifier (globally uniq AMF identifier, GUAMI) when establishing a connection to a RAN, the gNB may forward the registration request message to a default AMF.

The AMF may verify whether the S-NSSAI in the "requested NSSAI" is allowed based on "subscribed S-NSSAIs". The "subscribed S-NSSAIs" may be obtained by the AMF from a unified data management UDM network element. The AMF may determine a registration area, so that all S-NSSAIs of the "allowed NSSAI" of the registration area are available in all tracking areas of the registration area, and then return the "allowed NSSAI" to the terminal device. Optionally, the AMF returns mapping from the "allowed NSSAI" to the "subscribed S-NSSAIs" to the terminal device. Optionally, the AMF may return one or more "rejected S-NSSAIs" and a rejection reason of each of the one or more "rejected S-NSSAIs". If a rejection reason value of the S-NSSAI indicates that network slice-specific identity authentication and authorization of the network slice fails or is revoked, the UE may reattempt to request the S-NSSAI based on a local policy.

The AMF sends a registration accept (registration accept) message to the gNB, and the registration accept message indicates that a registration request has been accepted by the AMF. After receiving the registration accept message from the AMF, the gNB may forward the registration accept message to the UE.

For a network slice selection procedure that can be completed through interaction between the modem module and the network device, refer to steps in the foregoing described slice selection procedure. For details not described in the related procedure, refer to the existing technology, and details are not described herein again.

In this way, the APP may be bound to the target network slice, and the APP is associated with the PDU session supporting the target network slice. The modem module may further feed back the association success indication information to the network slice selection SDK.

If there is already one PDU session supporting the target network slice that the APP expects to use, the terminal device associates the application with the PDU session supporting the target network slice, that is, the terminal device routes a data stream of the application to the PDU session. If there is no PDU session supporting the target network slice that the APP expects to use, the terminal device initiates an establishment procedure of the PDU session supporting the target network slice, to associate the application to the established PDU session. The establishment procedure of the PDU session may include the following steps.

Step 1: The modem of the terminal device sends a PDU session establishment request to the AMF.

The terminal device may send the PDU session establishment request (PDU session establishment request) to the AMF by using a non-access stratum (Non-access stratum, NAS) message.

The PDU session establishment request may include parameters such as a PDU session ID (PDU session ID), a PDU session type (PDU Session type), an SSC Mode, a DNN, and S-NSSAI (S-NSSAI corresponding to a service). The S-NSSAI in the PDU session establishment request may be the network slice identifier in one of the foregoing three indication manners.

The S-NSSAI carried in the PDU session request message is forwarded to the AMF through a wireless network. The AMF checks the S-NSSAI in the PDU session request message, selects a corresponding SMF based on a slice capability supported by each SMF in the network, and forwards the session establishment request to the SMF.

Step 2: The AMF sends a PDU session create request (PDU session create request) to the SMF.

The AMF may send the PDU session create request to the SMF by using HTTP2 POST. The PDU session create request may include parameters such as an SUPI, a DNN, a PDU Session ID, S-NSSAI, and a Request Type.

The SMF may establish a context of the PDU session. The SMF may obtain subscription information responded by a user to the UDM, then deliver a policy control message to the UPF, the RAN, and the terminal device, and the UPF, the RAN, and the terminal device establish a PDU session connection.

Step 3: The SMF sends a session create response (PDU session create response) to the SMF.

After determining that establishment of the PDU session connection is completed, the SMF may send the session create response to the AMF, to indicate that the PDU session is successfully established.

Step 4: The AMF sends a PDU session establishment accept (PDU session establishment accept) to the terminal device.

The AMF replies a session establishment request response to the terminal device, to indicate that the PDU session is successfully established. The terminal device associates the application with a newly established PDU session, that is, the terminal device routes (route) the data stream of the application on the newly established PDU session.

In addition, if the PDU Session Establishment Request sent by the terminal device is rejected by the network side, that is, establishment of the PDU session fails, the terminal device re-matches another URSP rule, and initiates establishment of the PDU session based on the re-matched URSP rule.

Descriptions are provided above by using an example in which the network slice selection SDK determines, based on the URSP rule, one target network slice corresponding to the APP. If the network slice selection SDK determines, based on the URSP rule, a plurality of target network slices corresponding to the APP, registration of one or more network slices may be rejected. It may be understood that the APP is finally bound to one of the target network slices, and the APP is associated with the PDU session supporting the target network slice.

S105: The network slice selection SDK determines a data processing level of a service data of the APP in the UE based on the target network slice.

Based on a new network slice selection rule (or referred to as a new URSP rule) provided in this embodiment of this application, the network slice selection SDK may further determine the data processing level of the service data of the APP in the UE based on the target network slice.

In the first possible implementation described above, the network slice selection SDK may explicitly indicate the data processing level of the application in the terminal device by using the first indication information newly added to the newly defined network slice identifier. In the second possible implementation described above, the network slice selection SDK may explicitly indicate the data processing level of the application in the terminal device by using the second indication information newly added to the existing network slice identifier and a type of the network slice. In the third possible implementation described above, the network slice selection SDK implicitly indicates the data processing level of the application in the terminal device by using the existing network slice identifier.

Based on the three implementations, how the network slice selection SDK determines the data processing level of the service data of the APP in the UE based on the target network slice. For detailed explanations of the data processing level, refer to the foregoing descriptions. Details are not described herein again.

S106: The UE processes the service data of the APP based on the data processing level.

After the data processing level of the service data of the APP in the UE is determined, the UE may process the service data of the APP based on the corresponding data processing level.

In this way, the data processing level of the service data of the APP inside the UE is matched, so that a corresponding requirement (for example, a low latency, a high rate, or a high priority) of the service data can be ensured, and a problem of poor service experience caused by mismatching between network slice performance and a data processing situation inside the terminal can be avoided.

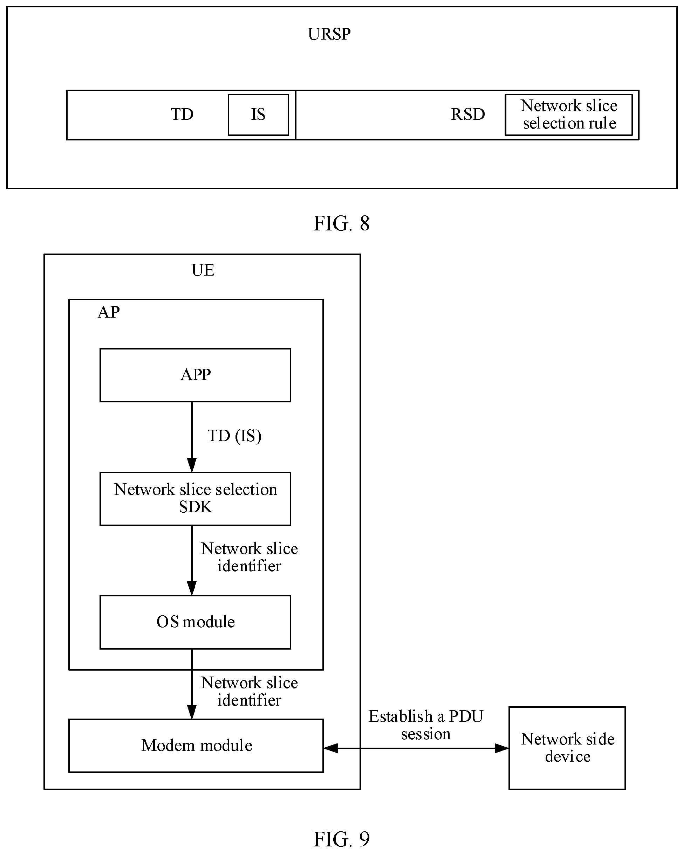

In a specific implementation, as shown in FIG. 8, the TD parameter of the S-NSSAI includes a newly defined IS parameter, and a new network slice selection rule provided in this embodiment is set in an RSD of the URSP rule. The IS parameter corresponds to one or more values, and different values of the IS parameter correspond to different network slices. In this case, the network slice selection SDK may match the target network slice corresponding to the APP based on the IS parameter. For example, IS 1 corresponds to a network slice NSSAI 1, and IS 2 corresponds to a network slice NSSAI 2.

Optionally, in the first possible implementation described above, the first indication information in the newly defined network slice identifier is the IS parameter. If a value of the IS parameter sent by a first APP to the network slice selection SDK is the same as a value of the first indication information (namely, the IS parameter) in an identifier of a first network slice, a network slice corresponding to the first APP is the first network slice. In addition, the IS parameter may be further used for determining the data processing level of the application in the terminal device. In this case, the network slice selection SDK may determine the data processing class of the APP in the terminal device based on the IS parameter. Different values of the IS parameter correspond to different data processing levels. For example, IS 1 corresponds to a low-latency processing class, and IS 2 corresponds to a high-latency processing class.

The value of the IS parameter of a target APP may be determined by negotiation between a developer of the APP and a producer of the terminal device, for example, may be purchased by the developer of the APP from the producer of the terminal device. In this way, the developer of the target APP may negotiate with the producer of the terminal device to determine the data processing level satisfying a service requirement of the developer of the target APP.

Refer to FIG. 9. In this implementation, steps in the communication method shown in FIG. 6 may be adjusted as follows:
S201: An APP sends an activation request for establishing a network connection service to a network slice selection SDK.

The activation request may include a TD (Traffic Descriptor, traffic descriptor) parameter of the APP, and the TD parameter includes an IS parameter.

S202: The network slice selection SDK determines, based on the IS parameter, a target network slice corresponding to the APP, and sends an identifier of the target network slice to an OS module.

The identifier of the target network slice includes the IS parameter.

S203: The OS module sends the identifier of the target network slice to a modem module.

S204: The modem module interacts with a network device, associates the APP with a PDU session supporting the target network slice, and feeds back association success indication information to the network slice selection SDK.

S205: The network slice selection SDK determines a data processing level of service data of the APP in the UE based on the IS parameter in the identifier of the target network slice.

S206: The UE processes the service data of the APP based on the data processing level.

For details that are not explained and described in this procedure, refer to the foregoing descriptions. Details are not described herein again.

In another specific implementation, a newly defined IS parameter is added to an RSD parameter of a URSP rule. The IS parameter corresponds to one or more values, and different values of the IS parameter correspond to different data processing levels. In this case, the network slice selection SDK may determine the data processing class of the APP in the terminal device based on the IS parameter. For example, IS 1 corresponds to a low-latency processing class, and IS 2 corresponds to a high-latency processing class.

To prevent the network slice from being abused by another APP, in this embodiment of this application, a security verification mechanism is further added on a side of the network slice selection SDK.

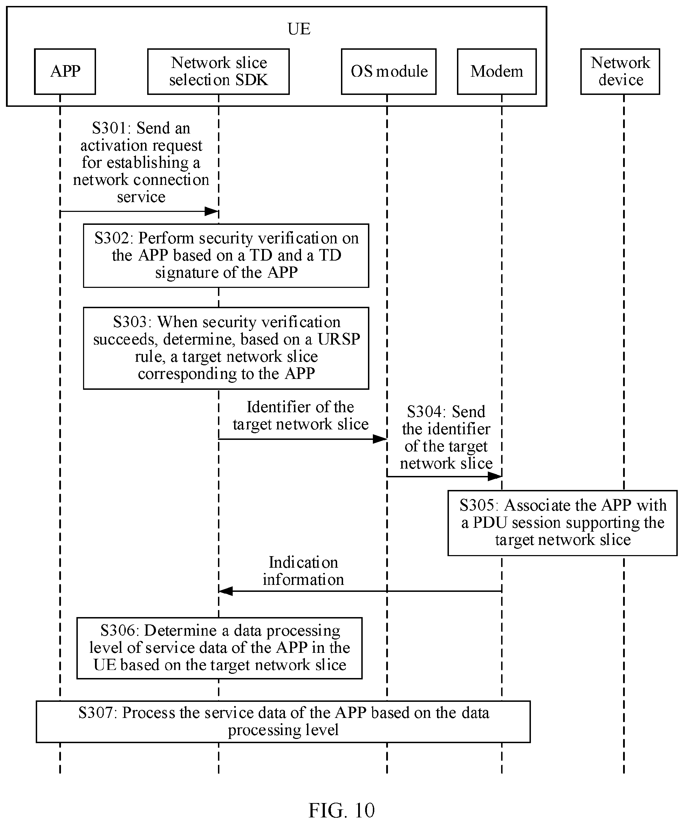

As shown in FIG. 10, an embodiment of this application provides a communication method. The communication method may specifically include the following steps.

S301: An APP sends an activation request for establishing a network connection service to a network slice selection SDK.

The activation request includes a TD parameter and a TD parameter signature of the APP.

For example, the TD parameter signature is generated by encrypting a hash value of the TD parameter.

In an implementation, the TD parameter may include the foregoing IS parameter. For a subsequent processing procedure, refer to the foregoing descriptions. Details are not described herein again.

S302: The network slice selection SDK performs security verification on the APP based on the TD parameter and the TD parameter signature.

The grid slice selection SDK decrypts the TD parameter signature, to obtain the hash value of the TD parameter, and performs security verification on the APP by comparing a hash value, of the TD parameter, obtained through decryption with a hash value, of the TD parameter, obtained by parsing the activation request. If the hash value, of the TD parameter, obtained through decryption is consistent with the hash value, of the TD parameter, obtained by parsing the activation request, security verification of the APP succeeds; otherwise, security verification of the APP fails.

The TD parameter signature is generated through encryption based on a signature private key, and the grid slice selection SDK decrypts the TD parameter signature based on a signature public key paired with the signature private key.

In an implementation, the TD parameter signature of the APP is generated by encrypting, by a terminal server corresponding to UE, the hash value of the TD parameter of the APP based on the signature private key. In addition, the terminal server sends the signature public key paired with the signature private key to the UE (for example, sends the signature public key to the network slice selection SDK of the UE), and the network slice selection SDK locally stores the signature public key.

In an example, the grid slice selection SDK parses the activation request to obtain the TD parameter and the TD parameter signature, decrypts the TD parameter signature based on the locally stored signature public key, and uses the hash value, of the TD parameter, obtained through decryption as security verification information. The grid slice selection SDK verifies, based on the security verification information (namely, the hash value, of the TD parameter, obtained through decryption), the TD parameter obtained through parsing, determines whether hash values, of the TD parameter, obtained through parsing are consistent, and if the hash values, of the TD parameter, obtained through parsing are consistent, determines that security verification of the APP succeeds; otherwise, determines that security verification of the APP fails.

In an example, the grid slice selection SDK parses the activation request to obtain the TD parameter and the TD parameter signature, decrypts the TD parameter signature based on the locally stored signature public key, and uses the hash value, of the TD parameter, obtained through decryption as security verification information. The grid slice selection SDK sends the security verification information (namely, the hash value, of the TD parameter, obtained through decryption) to the corresponding terminal server, to perform security verification on the APP through the terminal service. The terminal server performs security verification on the APP based on the received security verification information, determines whether the security verification information is consistent with the hash value of the TD parameter of the corresponding APP, and if the security verification information is consistent with the hash value of the TD parameter of the corresponding APP, feeds back, to the grid slice selection SDK of the UE, indication information indicating that security verification succeeds; otherwise, feeds back, to the grid slice selection SDK of the UE, indication information indicating that security verification fails.

S303: If security verification of the APP succeeds, on a basis of a URSP rule, the network slice selection SDK determines, based on the TD parameter, a target network slice corresponding to the APP, and sends an identifier of the target network slice to an OS module.

S304: The OS module sends the identifier of the target network slice to a modem module.

S305: The modem module interacts with a network device, associates the APP with a PDU session supporting the target network slice, and feeds back association success indication information to the network slice selection SDK.

S306: The network slice selection SDK determines a data processing level of a service data of the APP in the UE based on the target network slice.

S307: The UE processes the service data of the APP based on the data processing level.

In this way, the UE not only can ensure a corresponding requirement (for example, a low latency, a high rate, or a high priority) of the service data, thereby avoiding a problem of poor service experience caused by mismatching between network slice performance and a data processing situation inside the terminal; and but also can perform security verification on the APP before associating the APP with the network slice, thereby avoiding a problem of abuse of the network slice.

Based on the foregoing technical solution, the network slice selection SDK may further update a URSP rule (including a network slice selection rule) configured on a side of the terminal, to determine, by using the updated URSP rule, the network slice corresponding to the APP, and determine the data processing level of the APP in the terminal device.

In an implementation, when the URSP rule is configured on a network side, the updated URSP rule may be delivered to the side of the terminal through the network device. For example, an H-PCF may configure the updated network slice selection rule for the terminal device through an AMF and a gNB. For example, the updated URSP rule may be configured to the terminal device by using a registration command message. For another example, a communication operator may configure the updated URSP rule for the terminal device. The updated URSP rule is received by the modem module of the UE, and is sent to the network slice selection SDK through the modem module.

In an implementation, when the URSP rule is configured on the side of the terminal, the URSP rule may be updated based on a terminal platform or an SDK platform of the terminal.

In this embodiment of this application, a terminal centralization solution is used, so that in comparison with an operating system centralization solution and a modem centralization solution, a period required for updating the URSP rule is shorter, and the URSP rule is more limited to maintenance and management.

An embodiment further provides a computer storage medium. The computer storage medium stores computer instructions. When the computer instructions are run on an electronic device, the electronic device is enabled to perform the foregoing related method steps, to implement the communication method in the foregoing embodiments.

An embodiment further provides a computer program product. When the computer program product is run on a computer, the computer is enabled to perform the related steps, to implement the communication method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus is run, the processor may execute the computer-executable instructions stored in the memory, so that the chip performs the communication method in the foregoing method embodiments.

The electronic device (for example, a mobile phone), the computer storage medium, the computer program product, or the chip provided in embodiments may be configured to perform the corresponding method provided above. Therefore, for beneficial effect that can be achieved, refer to the beneficial effect of the corresponding method provided above. Details are not described herein again.

According to the foregoing descriptions of the implementations, a person skilled in the art may understand that for a purpose of convenient and brief description, division into the foregoing functional modules is merely used as an example for illustration. During actual application, the foregoing functions may be allocated to different functional modules for implementation based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

In the foregoing descriptions, the foregoing embodiments are merely used to describe the technical solutions of this application, but not to limit the technical solutions. Although this application is described in detail with reference to the above embodiments, a person of ordinary skill in the art should understand that modifications may still be made to the technical solutions described in the foregoing embodiments, or equivalent replacements may be made to the part of the technical features; and these modifications or replacements will not cause the essence of corresponding technical solutions to depart from the scope of the technical solutions in embodiments of this application.

## Claims

1. A communication method, applied to a terminal device, wherein the terminal device comprises an SDK module, an OS module, and a modem module, and the method comprises:
obtaining, by the SDK module, an activation request, for establishing a network connection service, sent by a target APP, wherein the activation request comprises a traffic descriptor TD parameter;
on a basis of a UE route selection policy URSP rule, determining, by the SDK module based on the TD parameter, a target network slice corresponding to the target APP, and sending an identifier of the target network slice to the OS module;
sending, by the OS module, the identifier of the target network slice to the modem module; and
interacting, by the modem module, with a network device based on the identifier of the target network slice, and associating the target APP with a PDU session supporting the target network slice, wherein
service data of the target APP is processed in the terminal device based on a data processing class matching the target network slice.

2. The method according to claim 1, wherein the activation request further comprises a TD parameter signature; and
the determining, by the SDK module based on the TD parameter, a target network slice corresponding to the target APP comprises:
when determining, based on the TD parameter signature, that security verification of the target APP succeeds, determining, by the SDK module based on the TD parameter, the target network slice corresponding to the target APP.

3. The method according to claim 2, wherein the determining, by the SDK module based on the TD parameter signature, that security verification of the target APP succeeds comprises:
decrypting, by the SDK module, the TD parameter signature based on a signature public key, to obtain a first hash value, wherein the TD parameter signature is generated based on a signature private key paired with the signature public key; and
if determining that the first hash value is consistent with a second hash value, determining, by the SDK module, that security verification of the target APP succeeds, wherein the second hash value is obtained by performing hash computing on the TD parameter of the target APP.

4. The method according to claim 1, further comprising:
receiving, by the modem module, an updated URSP rule, and sending the updated URSP rule to the SDK module, so that the SDK module updates a local URSP rule.

5. The method according to any one of claims 1 to 4, further comprising:
determining, by the SDK module, the data processing class of the service data of the target APP in the terminal device based on a first identifier of the target network slice; or
determining, by the SDK module, the data processing class of the service data of the target APP in the terminal device based on a second identifier of the target network slice and a type of the target network slice; or
determining, by the SDK module, the data processing class of the service data of the target APP in the terminal device based on a type of the target network slice or a priority of the target network slice.

6. The method according to claim 5, wherein the determining, by the SDK module, the data processing class of the service data of the target APP in the terminal device based on a first identifier of the target network slice comprises:
determining, by the SDK module, the data processing class of the service data of the target APP in the terminal device based on first indication information in the first identifier of the target network slice, wherein the first identifier is a customized identifier of the network slice, and the first indication information is used to indicate the data processing level of the APP in the terminal device.

7. The method according to claim 6, wherein the identifier, of the target network slice, that is sent by the SDK module to the OS module and the identifier, of the target network slice, that is sent by the OS module to the modem module are the first identifier of the target network slice.

8. The method according to claim 5, wherein the determining, by the SDK module, the data processing class of the service data of the target APP in the terminal device based on a second identifier of the target network slice and a type of the target network slice comprises:
determining, by the SDK module, the data processing class of the service data of the target APP in the terminal device based on second indication information in the second identifier of the target network slice and the type of the target network slice, wherein the second identifier is a network slice identifier specified in a communication protocol, and the second indication information is indication information newly added to the network slice identifier, and is used to indicate the data processing level of the APP in the terminal device.

9. The method according to claim 8, wherein the identifier, of the target network slice, that is sent by the SDK module to the OS module and the identifier, of the target network slice, that is sent by the OS module to the modem module are the second identifier of the target network slice.

10. The method according to claim 5, wherein an aspect related to the data processing level comprises at least one of the following:
a priority, a latency, a rate, data security, and data reliability.

11. The method according to claim 6, wherein when the SDK module determines the data processing class of the service data of the target APP in the terminal device based on the first identifier of the target network slice, the first indication information is a target parameter;
the TD parameter of the target APP comprises the target parameter; and
the determining, by the SDK module based on the TD parameter, a target network slice corresponding to the target APP comprises:
using, by the SDK module, a first network slice as the target network slice corresponding to the target APP, wherein a target parameter value in a first identifier of the first network slice is the same as a target parameter value of the target APP.

12. The method according to claim 11, wherein when values of the target parameter are different, data processing levels of the APP in the terminal device are different.

13. The method according to claim 11, wherein the target parameter value of the target APP is determined by negotiation between a developer of the target APP and a producer of the terminal device.

14. A terminal device, comprising:
one or more processors;
a memory; and
one or more computer programs, wherein the one or more computer programs are stored in the memory; and when the computer program is executed by the one or more processors, the terminal device is enabled to perform the communication method according to any one of claims 1 to 13.

15. A chip, wherein the chip comprises a processing circuit and a transceiver pin;
the transceiver pin and the processing circuit communicate with each other through an internal connection path; and
the processing circuit performs the communication method according to any one of claims 1 to 13, to control a receiving pin to receive a signal, and control a sending pin to send a signal.

16. A computer-readable storage medium, comprising a computer program, wherein when the computer program is run on an electronic device, the electronic device is enabled to perform the communication method according to any one of claims 1 to 13.
